# EUROPEAN PATENT SPECIFICATION

(11) **EP 0 565 015 B1**
(45) Date of publication and mention of the grant of the patent: **28.08.1996**
(21) Application number: 93105579.2
(22) Date of filing: 05.04.1993
(51) Int. Cl.: F16F 9/32, F16J 15/32, F16F 9/43

(54) **Gas spring**
Gasfeder
Ressort à gaz

(30) Priority: 09.04.1992 US 865956; 08.10.1992 US 958554
(43) Date of publication of application: 13.10.1993
(73) Proprietor: DIEBOLT INTERNATIONAL, INC., Detroit, Michigan (US)
(72) Inventor: Cotter, Jonathan P., Dearborn, Michigan (US); Cotter, Patrick J., Plymouth, Michigan (US)
(74) Representative: Blumbach, Kramer & Partner

(56) References cited:
- EP-A- 0 002 144
- EP-A- 0 353 703
- CH-A- 359 940
- DE-C- 4 000 245
- FR-A- 1 056 617
- FR-A- 2 400 148
- FR-A- 2 524 098
- GB-A- 2 099 956
- GB-A- 2 135 405
- US-A- 4 792 128
- US-A- 4 955 460

## Description

This invention relates generally to gas springs, and more particularly to a gas spring having the features of the preamble to claim 1.

A gas spring of this kind (FR-A-2,400,148) has a groove at the end of the rod wherein the piston is fixed, therefore, the outermost end of the rod can be considered as an enlargement. The outer diameter of the enlargement corresponds to the outer diameter of the rod and, therefore, is smaller than the inner diameter of the bearing.

Gas springs may be employed to yieldably clamp a workpiece while operations are performed thereon. Thus a sheet metal part may be held down by gas springs during stamping or forming. The gas springs can be operated with either an external source of gas or can be precharged and operated as a self-contained unit. Self-contained untis may be charged with an inert gas at a pressure of 70 bars (2000 psi), and in use the pressure may increase to 100 to 170 bars (3000 to 5000 psi). Examples of such gas springs are shown in US-A-4,792,128 and 4,838,527.

Due to these high pressures, gas springs may be dangerous, if they fail. The invention aims to improve the safety of gas springs.

The invention is defined in claim 1.

The gas spring is precharged, replaceable or disposable and has improved seals capable of retaining the gas charge for long periods.

More specifically, the gas spring has a sealing assembly at one end of the casing which seals around the piston rod and is composed of a reinforcing ring having a sealing ring secured to one side thereof and a wiper secured to the other side. The sealing ring and wiper may be portions of a single body of flexible, compressible elastomeric material molded to the reinforcing ring and interconnected through openings in the reinforcing ring. Preferably, the end of the gas spring cylinder or casing is rolled radially inwardly by swaging into pressure contact with the reinforcing ring of the sealing assembly. The reinforcing ring serves not only to reinforce the sealing assembly but also cooperates with the casing in retaining the sealing assembly in the casing. The opposite end of the casing is closed by an end cap, and a sealing ring seals the line of contact between the end cap and casing. This opposite end of the casing is also preferably rolled by swaging over the end cap to virtually eliminate any gap at the line of contact between the end cap and casing and preclude extrusion of the sealing ring at this point.

Preferably, the piston is a separate ring attached to the rod by an enlarged flared portion so that in the unlikely event they become separated in use, the enlarged portion will become embedded in the rod bearing to prevent the rod from being propelled out of the gas spring. Preferably, in the event the piston and rod become separated, a bleed passage in the rod will vent to the atmosphere the compressed gas in the spring.

Objects, features and advantages of the invention are to provide a gas spring which has the foregoing characteristics, a long in-service useful life and is disposable, self-contained, rugged, durable, reliable, of simplified design and of relatively economical manufacture and assembly.

### BRIEF DESCRIPTION OF THE DRAWINGS

These and other objects, features and advantages of this invention will be apparent from the following detailed description, appended claims and accompanying drawings in which:

Figure 1 is a longitudinal sectional view of a gas spring constructed in accordance with the invention.

Figure 2 is an enlarged sectional view of the reinforcing and sealing ring assembly at the front end of the gas spring.

Figure 3 is an elevational view of a reinforcing ring which forms a part of the sealing ring assembly.

Figure 4 is a sectional view taken on the line 4--4 in Figure 3.

Figure 5 is a fragmentary sectional view of the rear end portion of a gas spring with a modified filler valve assembly.

Figure 6 is a fragmentary sectional view of the rear end portion of a gas spring showing another modified filler valve assembly.

Figure 7 is an enlargement of a portion of Figure 6, in which the O-ring is shown in the open position during charging of gas into the gas spring.

Figure 8 is an enlargement of a portion of Figure 6 showing the O-ring in the sealed position after charging the gas spring.

Figure 9 is a longitudinal sectional view of a gas spring embodying the invention with a bleed passage which vents compressed gas to the atmosphere in the event the piston and rod become separated and illustrating the piston and rod in their normal assembled and operating relationship.

Figure 10 is a longitudinal sectional view of the gas spring of Fig. 9 illustrating separation of the rod and piston with the rod retained in the gas spring by the rod bearing and the bleed passage in the position venting compressed gas in the spring to the atmosphere.

### DETAILED DESCRIPTION

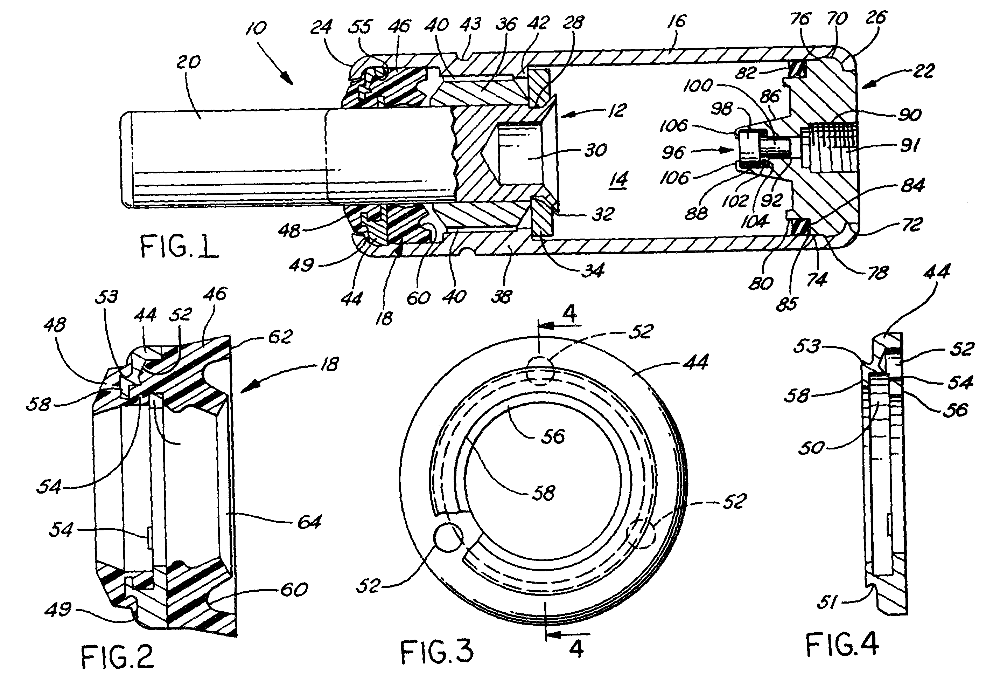

Referring now more particularly to the drawings and especially to Figures 1 to 4, the gas spring 10 comprises a piston and rod assembly 12 reciprocable in a chamber 14 of a casing 16, with a sealing assembly 18 at the front end of the casing through which a piston rod 20 extends, and an end cap 22 closing the rear end of the casing. The casing 16 is an elongated, openended tubular member with end portions 24 and 26 turned radially inwardly as shown. The sealing assembly seals the space between opening 24a of the casing 16 and the rod 20.

The piston rod 20 is an elongated cylindrical member. The inner end portion 28 of the piston rod has a central axially extending clearance socket or recess 30 and is of reduced outside diameter to form an annular shoulder 32. A piston 34 is sleeved on the inner end portion 28 and abuts the shoulder 32. The inner end portion 28 of the rod is flared, preferably by rolling, to clamp the piston 34 against shoulder 32.

The piston 34 is guided for axial reciprocation within the casing chamber 14 by a bearing 36. The bearing is a ring-shaped sleeve and is preferably formed of sintered bronze, impregnated with lubricant and is secured within a thickened portion 38 of the casing near its front end as by a press fit. The radially outer surface of the bearing has a plurality of axially extending grooves 40 to permit gas in the chamber to move freely through the grooves from one end of the bearing to the other when the piston reciprocates. The rear end of the thickened portion provides an annular shoulder 42 which the washer contacts upon forward movement of the piston to limit such forward movement. An annular groove 43 in the outer surface of the casing is useful for the purpose of mounting or anchoring the gas spring. This groove is preferably formed in the thickened portion of the casing so that it will not weaken the casing wall which must withstand the high pressure of gas in the chamber.

The sealing assembly 18 at the forward end of the casing comprises a steel reinforcing ring 44, a sealing ring 46, and a wiper 48. The sealing ring and wiper are preferably portions of an integral body of flexible, compressible elastomeric material, preferably polyurethane.

The reinforcing ring 44 is circular and along its radially inner surface is formed to provide a circular radially inwardly opening annular groove or channel 50 (Figure 4). A plurality of equally circumferentially spaced blind holes 52 are formed in the back face of the reinforcing ring, opening through the back face only. These blind holes communicate with the groove or channel 50 through a plurality of ports 54, one for each hole, which open radially inwardly into the channel 50 preferably at the juncture between the bottom wall and rear wall of the channel.

The inner diameter of the rear wall 56 of the channel 50 is only slightly larger than the diameter of the piston rod to clear the piston rod as it reciprocates. The front wall 58 of the channel is of a somewhat larger diameter as will be apparent in Figures 1, 2 and 4.

A radially outwardly opening annular groove 51 behind the outer extremity of the front face of the reinforcing ring 44 provides an annular shoulder or ledge 53 which assists in retaining the wiper as will become more apparent hereinafter.

The outside diameter of the reinforcing ring 44 is complimentary with the inside diameter of a shallow shoulder 55 in the casing. Preferably the front end portion 24 of the casing 16 is rolled radially inwardly over the reinforcing ring by swaging it into pressure contact with the reinforcing ring throughout a full 360° circumference. The reinforcing ring 44 not only reinforces the sealing assembly 18 but also serves as a retainer to retain the sealing assembly within the casing against forward displacement due to the pressure of gas in the chamber. The sealing assembly becomes in effect an end cap for the casing.

The rear wall of the sealing ring 46 preferably has an inside diameter somewhat less than the diameter of the piston rod 20 and an outside diameter somewhat greater than the inside diameter of the casing 16 so that it will fit snugly within the casing and provide a seal around the piston rod. Preferably the rear wall or the sealing ring 46 has an annular groove or recess 60 so that the pressure of gas in the chamber 14 will force the rear lips 62 and 64 of the sealing ring both outwardly into firm sealing engagement with the inner wall of the casing and inwardly into firm sealing engagement with the piston rod 20.

The front of the seal has a scraper or wiper 48 which is ring-shaped and of the cross-section shown, and with a minimum inside diameter somewhat less than the outside diameter of the piston rod 20 in order to be compressed thereagainst and prevent the entry of dirt or other foreign matter into the chamber 14 of the gas spring. The wiper 48 has an outer portion 49 clamped between and making sealing contact with the reinforcing ring 44 and the front end portion 24 of the casing.

The sealing assembly 18 is preferably formed by molding elastomeric material around the reinforcing ring through the blind holes 52, ports 54 and channel 50 and on both sides of the ring to form the sealing ring 46 and the wiper 48. The sealing ring and wiper are integrally connected by molding material in the blind holes, ports and channel and the wiper 48 is retained by the channel 50 and in assembly by the overlaping casing end portion 24. During axial reciprocation of the piston rod 20 in chamber 14, the elastomeric material of the wiper 48 is subjected to a reversal of forces due to frictional drag.

Because of high temperatures (66°C, 150°F), pressures (70-170 bars, 2000-5000 psi), and pressure fluctuations in use there is a decided tendency for the elastomeric material to extrude through the blind holes 52, ports 54 and channel 50 from one side of the reinforcing ring 44 to the other, eventually destroying the seal. This is resisted and essentially prevented, however, due to the fact that the openings through reinforcing ring 44 do not provide a direct axial passage. Any flow of elastomeric material would have to pass into the blind holes, and then through the substantially radial ports 54 and through the groove or channel 50 and axially around the wall 58. Also, the ledge 53 over which the wiper 48 is molded serves as a lock for the wiper and prevents it from becoming dislodged as a result of piston rod drag. Hence, the sealing assembly 18 remains intact throughout long periods of use in service. The seal assembly also retains the lubricant in the chamber since it is downstream or forward of the bearing 36.

The radially outer surface of the end cap 22 for the back end of the gas spring has a central portion 70 which curves radially inwardly in a rearward direction and joins a cylindrical rear portion 72. The central portion 70 is separated from a front portion 74 of reduced diameter by an annular shoulder 76. The shoulder 76 abuts an annular shoulder 78 on the inner wall of the casing. The front face of the end cap has an annular recess 80 along its outer edge which receives a sealing ring 82 of generally X-shaped cross-section, commonly referred to as a quad ring. This quad ring 82 seals at all four edges including the juncture or line of contact 85 between the bottom wall 84 of the recess and the inner wall of the casing.

Preferably the rear end portion 26 of the casing 16 is rolled radially inwardly by swaging over the curved central portion 70 of the outer surface of the end cap into pressure contact therewith throughout a full 360° circumference. As a result, any gap between the end cap and casing at the line of contact 85 is virtually eliminated, whereby the quad ring 82 will not be damaged or extruded through at this point by the pressure of gas in the chamber.

The end cap has a central projection 86 forming a valve housing 88 extending rearwardly into the casing chamber. The projection 86 is aligned with and smaller in diameter than the recess or socket 30 in the piston in order to permit a full stroke of the piston without interference. An axially extending fill passage 90 extends through the end cap, having an enlarged threaded rear portion 91 opening through the rear wall for attachment to a source of gas under pressure, and a narrower intermediate portion 92 extending forwardly therefrom into the valve housing counterbore 88 which is of somewhat larger diameter than the intermediate portion and opens into the chamber 14. The threaded portion of the passage may also be used to attach the gas spring to a support, thereby serving as an anchor for the gas spring.

A rivet type valve 96 with a head 98 and a shank 100 is slidably received in the housing 88. The head 98 is of smaller diameter than the inner wall of the housing 88, but larger than the intermediate portion 92 of the passage. The shank 100 is of smaller diameter than the head and the intermediate portion 92 of the passage. An O-ring seal 102 surrounding the shank is provided between the head 98 of the valve and the shoulder 104 of the valve housing. The front end of the wall of the projection 86 forming housing 88 has circumferentially spaced tabs 106 bent radially inwardly to confine the valve 96 in the housing. When charging the chamber, the valve 96 is shifted forwardly away from the shoulder 104 and against tabs 106 and gas flows along the sides of the valve shank and around the valve head. When charged, the pressure of gas in the chamber shifts the valve rearwardly so that the valve head seals against the O-ring and closes the charging passage. The charged chamber 14 can be relieved by manually displacing the head 96 so that gas blows out through the passage 90 to the atmosphere. The head is displaced by engaging the end of the shank 100 with a rod, screw driver, or the like and pushing the head inward.

To assemble the gas spring, and before the ends of the casing are turned radially inwardly, the sealing assembly 18 may be positioned within the front end of the casing and the front end portion 24 rolled as by swaging to the position in Figure 1 into pressure contact with the reinforcing ring of the sealing assembly to retain the sealing assembly in the rear end of the casing. The bearing 36 is installed with a press fit within the casing either before or after the sealing assembly. The piston and piston rod are then inserted through the rear end of the casing and thereafter the end cap 22 is inserted through the back end of the casing with its shoulder 76 in contact with the casing shoulder 78 and the rear end portion 26 of the casing is swaged over the end cap to the position shown in Figure 1. This completes the assembly of the gas spring.

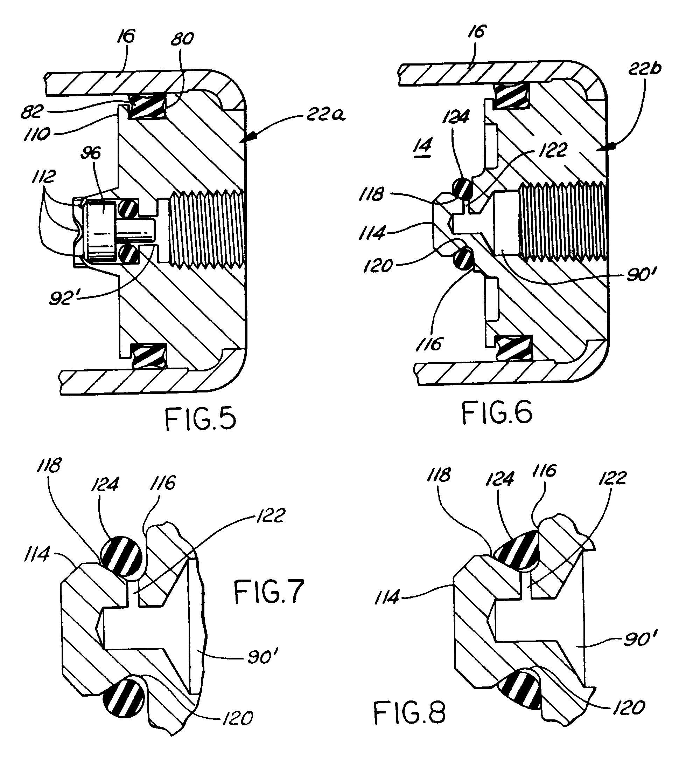

Figure 5 shows a modification in which the end cap 22a has a flange 110 extending radially outwardly part way across the recess 80 to partially confine the quad ring 82. Figure 5 differs further from the construction previously described in that the wall of the projection defining the valve housing 88 is staked radially inwardly at a plurality of circumferentially spaced points to provide tabs 112 overlapping the head of the valve 96 to retain it in the housing. The intermediate passage 92' is somewhat shorter than the one previously described. Otherwise the Figure 5 construction is essentially the same as the one previously described.

Figures 6 - 8 show a further modification in which the end cap 22b has a central knob or head 114 projecting into the chamber 14 from a radially extending front surface 116 of the end cap. This front surface and a tapered annular wall 118 of the head form a generally V-shaped annular recess or groove 120 behind the head. The fill passage 90' extending axially through the end cap dead ends in the head and opens into the chamber 14 through a lateral port 122 at the bottom of the V-shaped recess or groove 120. An O-ring 124 is disposed in the groove 120 and in its natural free state condition is of smaller inside diameter than the head 114. Preferably the O-ring is small enough to be slightly stretched when engaging both of the surfaces 116 and 118 of the groove when received therein to provide a seal at a relatively low pressure. The O-ring provides a resiliently biased sealing member valve. When the chamber is charged, gas entering the passage flows through the port 122 and, as shown in Figure 7, expands the O-ring enough to open the port and allow gas to enter the chamber. After the chamber has been charged with gas, the pressure of gas in the chamber presses the O-ring down into the recess or neck as shown in Figure 8, closing the port and sealing the chamber.

Preferably the O-ring and groove 120 are sized so that as shown in Figure 8 when the chamber 14 is pressurized the O-ring does not bottom out in the root or base of the groove. The diameter of the head 114 is also large enough to retain the O-ring in the groove during rapid filling of the chamber 14 with pressurized gas. To prevent damage to the O-ring the port 122 should be of relatively small diameter preferably about 0,38 mm (0,015 Inch). The side walls 116 and 118 are inclined to each other at an acute included angle of about 40° to 80° and preferably about 45° to 60°, and the radius of the base at the groove 120 is about 1/4 to 3/4 and preferable about 1/2 of the radius of the O-ring. Preferably the O-ring has a durometer of 70.

The construction of Figure 6 - 8 has the advantage of simplicity of manufacture and assembly. It has no moving parts, is designed to be filled one time only, and cannot be tampered with from outside the pressure vessel.

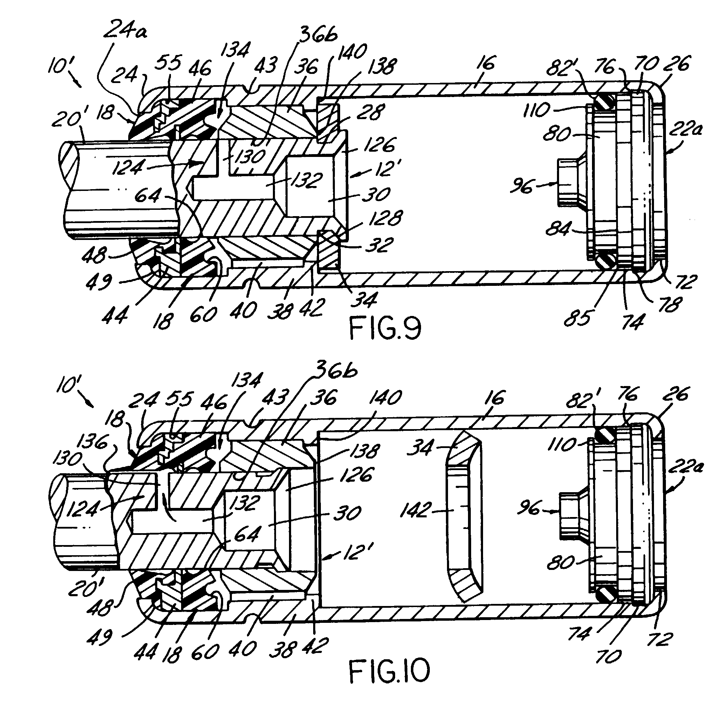

Figure 9 illustrates a modified gas spring 10' embodying this invention with a break away piston and rod assembly 12' and a bleed assembly 124. The piston 34 is in the form of a preferably flat annular washer received on the shoulder 32 of the rod and normally retained on the rod by an outwardly projecting flared portion 126 which is preferably circumferentially continuous. The flared portion 126 may be formed by staking the piston washer to the rod. To provide an interference fit to retain the rod in the bearing 36 in the event the piston washer 34 separates from the rod, the flared portion 126 projects radially outwardly of the main body of the rod so that it overlaps the bearing 36 and has an outside diameter greater than the inside diameter 366 of the bearing 36. To minimize the reduction of the outside diameter of the enlarged flared portion 126 by separation of the piston washer 34, preferably it is relatively thin and has a chamfered trailing edge 126 of its through hole which is engaged by the flared portion. Preferably, the trailing edge has a chamfer of about 45°.

The vent assembly 124 has an outlet port 130 extending transversely in the rod and opening into the side thereof which communicates with the interior of the gas spring through an axial passage 132 in the rod and the recess 30, so that compressed gas in the spring is discharged through the port 130 and bleeds to the atmosphere, only in the event that in use the annular piston washer 34 separates from the rod 20'. This is accomplished by locating the outlet port 130 axially along the rod so that, as shown in Figure 9, in normal use of the gas spring, the port 130 is upstream of the point at which the lip 64 of the seal 18 bears on and seals with the rod 20'. Preferably, when the rod is in its normal fully extended position, the port 130 overlaps the adjacent edge of the bearing 36 so that it communicates with the space 134 between the seal and the bearing. As shown in Figure 10, the port is also axially spaced sufficiently from the end of the rod so that in use, in the event the annular piston washer 34 separates from the rod 20', as the rod becomes embedded in the bearing, the port is disposed downstream of the sealing lip 64 (and preferably downstream of the rear wall portion 56 of the reinforcing ring 44) and communicates with the exterior atmosphere through an annular space 136 between the rod and the wiper 48 of the seal 18. Compressed gas escaping from the port 130 displaces the wiper 48 generally radially outward from its normal position to form the annular space 136.

In normal operation of the gas springs 10 and 10', the rod and piston are reciprocated from adjacent the fully extended position shown in Figures 1 and 9 to a retracted position adjacent the other end of the gas spring. When the piston rod moves to the fully extended position, it is stopped by the annular piston washer 34 bearing on the radially aligned edges 138 and 140 of the bearing and casing. In some applications, the piston rod is at least substantially unrestrained when the piston reaches the fully extended position and thus, it strikes the shoulder and bushing with substantial impact. In the event that repeated striking of the piston causes it to separate from the rod, as shown in Figure 10, the flared portion 126 will be embedded in the bearing 36 thereby preventing the rod from being propelled completely out of the gas spring by the compressed gas therein. As the flared portion becomes embedded in the bearing, the port 130 is advanced past the sealing lip 64 so that the compressed gas displaces the wiper 48 radially outward and is vented to the atmosphere through the space 136 between the wiper 48 and the rod 20'. With this construction, in the unlikely event that in use, the piston washer is separated from the rod, it is retained in the case and the compressed gas is vented so that it cannot propel the rod completely out of the gas spring.

By forming the piston as a relatively thin annular washer 34 with a chamfered trailing edge 128 engaging the complementary flared portion 126, when the washer separates from the rod, the washer distorts (as shown in Figure 10) and the diameter of its through hole 142 enlarges so that the outside diameter of the flared portion is only slightly reduced. This insures a substantial interference fit between the flared portion 126 and the bearing 36 so that the rod will definitely be retained in the gas spring by the flared portion embedding in the bearing. For example, if the bearing has an inside diameter of 12 mm (0.473 inch), the flange after staking has a thickness of 1.52 to 2.54 mm (0.060 to 0.100 inch) and preferably 2 mm (0.080 inch) and an outside diameter of 13.7 mm (0.540 inch), and the piston washer has an inside diameter of 11.63 mm (0.458 inch), an outside diameter of 20.32 mm (0.800 inch), a thickness of 2.54 mm (0.100 inch), and 45° chamfer of 1.27 mm (0.050 inch); then when the piston separates from the rod, the flared portion will still have a diameter of about 13.2 mm (0.520 inch), and hence an interference fit with the bushing of about 1.19 mm (0.047 inch). This interference fit is sufficient to retain the rod when the flared portion becomes embedded in the bearing.

## Claims

1. A gas spring comprising
an elongated tubular casing (16) enclosing a chamber (14) for containing gas under pressure and including an annular wall which defines an opening (24a) at one end (24) of said chamber (14),
a bearing (36) in said chamber adjacent said one end of said casing and having a through bore (36b),
a piston (34) in said chamber arranged upstream of said bearing (36) and having a central through hole (142),
a rod (20) received in said through bore (36b) of said bearing (36) for generally axial reciprocation therein and projecting from said chamber (14) through said opening (24a),
a seal (18) of a flexible and compressible material adjacent said one end (24) of said casing (16) and sealing the space between said casing (16) and said rod (20) to retain compressed gas in said chamber (14), and an enlargement (32, 126) connected to the rod (20) overlapping said through hole (142) of said piston (34), and connecting said rod (20) with said piston (34) for reciprocation in unison therewith,
characterized in that said enlargement (32, 126) has an outside diameter larger than the diameter of said through bore (36b) of said bearing (36) and is constructed and arranged so that, if said piston separates from said rod in use of the gas spring, said enlargement (32, 126) will pass through said piston (34) and become embedded in said bearing (36) to retain said rod (20).

2. The gas spring of claim 1
wherein the outside diameter of said enlargement (32, 126) is at least 0.25 mm (0.010 inch) larger than the inside diameter of said bearing (36).

3. The gas spring of claim 1 or 2
wherein said enlargement (32, 126) is a flared portion of said rod (20) and is homogenously integral with said rod.

4. The gas spring of any of claims 1 to 3
wherein a trailing edge of said through hole (142) of said piston (34) has a chamfer (128) thereon and said enlargement (32, 126) normally bears on said chamfer (128) of said piston.

5. The gas spring of claim 4
wherein said piston (34) is relatively thin and said chamfer (128) and enlargement (32, 126) are constructed and arranged so that, if said piston (34) separates from said rod (20), said piston (34) is deformed to enlarge the diameter of its said through hole (142), as said enlargement (32, 136) passes therethrough.

6. The gas spring of claim 5
wherein said piston (34) is a washer.

7. The gas spring of any of claims 1 to 6
which also comprises a stop (42, 138, 140) within and carried by said casing (16) on which said piston (34) bears when said rod (20) is in its normal fully extended position.

8. The gas spring of any of claims 1 to 7
which comprises an outlet port (130) in said rod (20) and is continuously communicating with said chamber (14) in said casing (16), said port (130) being axially spaced from the piston end of said rod (20) so that when said rod is in its normal fully extended position with said piston (34) received thereon, said port (130) is upstream of the point of sealing contact (64) of said seal (18) with said rod (20) and if said piston (24) separates from said rod (20) as said enlargement (32, 126) becomes embedded in said bearing (36), said port (130) is disposed axially downstream of said point of contact (64) of said seal (18) with said rod (20) so as to vent compressed gas to the atmosphere.

9. The gas spring of any of claims 1 to 8
wherein said seal (18) is a sealing assembly comprising
a reinforcing ring (44) encircling said rod (20) in supporting relationship to said annular wall (24),
a sealing ring (46) of flexible, compressible material secured to one side of said reinforcing ring (44) and having sealing contact with said annular wall (24) and with said rod (20), and
a wiper (48) of flexible, compressible material secured to the opposite side of said reinforcing ring (44),
encircling said rod (20) and having wiping contact with said rod.

10. The gas spring of claim 9
wherein said sealing ring (46) and wiper (48) are portions of a single body of elastomeric material molded to said reinforcing ring (44).

11. The gas spring of claim 10
wherein said sealing ring (46) and said wiper (48) are integrally connected through one or more openings (50, 52, 54) in said reinforcing ring (44).

12. The gas spring of claim 11
wherein said one or more openings (50, 52, 54) has at least one segment extending non-axially to thereby resist extrusion of elastomeric material through said opening as said piston (34) moves axially in said chamber (14).

13. The gas spring of claim 12
wherein said opening comprises a generally radially inwardly opening recess (50) in said reinforcing ring (44), at least one axially extending blind hole (52) adjacent said recess (50) opening through one side only of said reinforcing ring (44), and a port (54) from said hole (52) opening into a radially outer portion of said recess (50).

14. The gas spring of claim 13
wherein said recess (50) is an annular groove.

15. The gas spring of any of claims 9 to 14
wherein said annular wall of said casing (16) is swaged into pressure contact with said reinforcing ring (44).

16. The gas spring of claim 15
wherein said annular wall has a terminal portion (24) extending axially outwardly beyond the point of pressure contact with said reinforcing ring (44), said terminal portion (24) being rolled radially inwardly to confine and retain said reinforcing ring (44).

17. The gas spring of claim 16
wherein said wiper (48) has sealing contact with said terminal portion (24) of said annular wall.

18. The gas spring of claim 16 or 17
wherein said terminal portion (24) overlaps the periphery of said wiper (48).

19. The gas spring of any of claims 1 to 18
wherein said annular wall of said casing (16) defines a second opening, an end cap (22) is fitted within and engaging said annular wall along a circumferentially continuous line of contact to close said second opening, and a sealing ring (82) is provided in said chamber (14) in circumferentially continuous sealing contact with said annular wall and with said end cap (22), said annular wall being swaged into pressure contact with said end cap (22) along a line of contact to prevent said sealing ring (82) from being extruded between said annular wall and said end cap.

20. The gas spring of claim 19
wherein said annular wall has a terminal portion (26) extending axially beyond said line of contact and generally radially inwardly to confine and retain said end cap (22).

21. The gas spring as defined in claim 19 or 20
wherein said sealing ring (82) is a quad ring.

22. The gas spring of any of claims 19 to 21
wherein said end cap has a fill passage (90) therein for charging said chamber (14) with gas, said end cap (22) comprises a tubular valve housing (86, 88) projecting axially into said chamber (14) and terminating in an open inner end, said valve housing (86, 88) defines a portion (92) of said fill passage, a valve (96) having a head (98) is loosely fitted in said valve housing (86, 88) and a seal (102) is provided in said passage adjacent said valve, said valve (96) is subject to pressure of gas in said chamber (14) to engage said seal (102) and close said fill passage, and subject to the inflow of charging gas to open said fill passage, said valve housing (86, 88) has inwardly turned tabs (106) across said open end to retain said head (98) therein.

23. The gas spring of claim 22
wherein said tabs (106) are integrally formed on said inner end of said valve housing (86, 88).

24. The gas spring fo any of claims 19 to 21
wherein said end cap (22) has a fill passage (90') therein for charging said chamber (14) with gas, a head (114) projects axially from of said end cap (22a, 22b) into said chamber (14), a generally V-shaped groove (120) of reduced cross-section relative to said head (114) is provided and disposed between the free end of said head (114) and said end cap (22), said fill passage (90') opens to said chamber (14) through a port (122) in said groove (120), and a O-ring (124) encircles and is received in said groove (120), said O-ring (124) is subject to pressure of gas in said chamber (14) to engage and close said port (122) and is subject to the inflow of charging gas to open said port (122).

## Patentansprüche

1. Gasfeder mit folgenden Merkmalen:
ein längliches, rohrförmiges Gehäuse (16), welches eine Kammer (14) zur Aufnahme von Druckgas umschließt und eine ringförmige Wand umfaßt, die eine Öffnung (24a) an einem Ende (24) der Kammer (14) bestimmt;
ein Lager (36) in der Kammer, benachbart dem einen Ende des Gehäuses, das eine Durchgangsbohrung (36b) aufweist; ein Kolben (34), der in der Kammer stromauf von dem Lager (36) angeordnet ist und eine mittige Durchgangsbohrung (142) aufweist;
eine Kolbenstange (20), die in der Durchgangsbohrung (36b) des Lagers (36) aufgenommen wird, um sich generell axial hin- und herzubewegen und aus der Kammer (14) durch die Öffnung (24a) hindurch vorzustehen;
eine Dichtung (18) aus biegsamem und zusammenpreßbarem Material, die benachbart dem einen Ende (24) des Gehäuses (16) angeordnet ist und den Raum zwischen dem Gehäuse (16) und der Kolbenstange (20) abdichtet, um das Druckgas in der Kammer (14) zu halten;
eine mit der Kolbenstange (20) verbundene Verdickung (32, 126), welche die Durchgangsbohrung (142) des Kolbens (34) überlappt und die Kolbenstange (20) mit dem Kolben (34) verbindet, um sich gemeinsam mit diesem hin- und herzubewegen,
dadurch gekennzeichnet,
daß die Verdickung (32, 31, 26) einen Außendurchmesser aufweist, der größer als der Durchmesser der Durchgangsbohrung (36b) des Lagers (36) ist und so konstruiert und angeordnet ist, daß, wenn sich der Kolben von der Kolbenstange im Betrieb der Gasfeder löst, die Verdickung (36, 126) durch den Kolben (34) hindurchgelangt und im Lager (36) eingebettet wird, um die Kolbenstange (20) zurückzuhalten.

2. Gasfeder nach Anspruch 1,
dadurch gekennzeichnet, daß der Außendurchmesser der Verdickung (32, 126) um mindestens 0,25 mm (0,010 Zoll) größer als der Innendurchmesser des Lagers (36) ist.

3. Gasfeder nach Anspruch 1 oder 2,
dadurch gekennzeichnet, daß die Verdickung (32, 126) ein ausgeweitetes Teil der Kolbenstange (20) ist und homogen und integral zur Kolbenstange ausgebildet ist.

4. Gasfeder nach einem der Ansprüche 1 bis 3,
dadurch gekennzeichnet, daß die rückwärtige Kante der Durchgangsbohrung (142) des Kolbens (34) abgeschrägt (128) ist und die Verdickung (32, 126) normalerweise an der Abschrägung (128) des Kolbens sitzt.

5. Gasfeder nach Anspruch 4,
dadurch gekennzeichnet, daß der Kolben (34) relativ dünn ist und daß die Abschrägung (128) und die Verdickung (32, 126) so ausgebildet und angeordnet sind, daß, wenn der Kolben (34) sich von der Kolbenstange (20) löst, der Kolben (34) deformiert wird und sich der Durchmesser seiner Durchgangsbohrung (142) vergrößert, wenn die Verdickung (32, 136) durch diese hindurchgelangt.

6. Gasfeder nach Anspruch 5,
dadurch gekennzeichnet, daß der Kolben (34) ein Ring ist.

7. Gasfeder nach einem der Ansprüche 1 bis 6,
dadurch gekennzeichnet, daß sie einen Anschlag (42, 138, 140) innerhalb des Gehäuses (16) und von diesem getragen aufweist, an welchem der Kolben (34) anliegt, wenn die Kolbenstange (20) in ihrer normalen ausgefahrenen Stellung ist.

8. Gasfeder nach einem der Ansprüche 1 bis 7,
dadurch gekennzeichnet, daß eine Auslaßöffnung (130) in der Kolbenstange (20) vorgesehen ist, die in ständiger Verbindung mit der Kammer (14) und dem Gehäuse (16) steht, daß die Auslaßöffnung (130) axial von dem Kolbenende der Kolbenstange (20) beabstandet ist, so daß, wenn die Kolbenstange in ihrer normalen ausgefahrenen Stellung mit dem daran angebrachten Kolben (34) ist, die Öffnung (130) stromauf der Stelle des Abdichtkontakts (64) der Dichtung (18) an der Kolbenstange (20) gelegen ist, und wenn sich der Kolben (24) von der Kolbenstange (20) löst und die Verdickung (32, 126) in dem Lager (36) eingebettet wird, daß dann die Öffnung (130) axial stromab von der Berührungsstelle (64) der Dichtung (18) an der Kolbenstange (20) gelegen ist, so daß Druckgas zur Atmosphäre abgelassen wird.

9. Gasfeder nach einem der Ansprüche 1 bis 8,
dadurch gekennzeichnet, daß die Dichtung (18) eine Abdichtanordnung mit folgenden Bauteilen darstellt:
ein Verstärkungsring (44), der die Kolbenstange (20) umgibt und sich an der ringförmigen Wandung (24) abstützt,
ein Abdichtring (46) aus flexiblem, kompressiblem Material, der an einer Seite des Verstärkungsrings (44) angebracht ist und Abdichtkontakt mit der ringförmigen Wandung (24) und der Kolbenstange (20) hat, und
eine Dichtlippe (48) aus flexiblem, kompressiblem Material, die an der entgegengesetzten Seite des Verstärkungsrings (44) befestigt ist, die Kolbenstange (20) umgibt und in Dichtkontakt mit der Kolbenstange steht.

10. Gasfeder nach Anspruch 9,
dadurch gekennzeichnet, daß der Abdichtring (46) und die Dichtlippe (48) Teile eines einzelnen Körpers aus elastomerem Material darstellen, der an den Verstärkungsring (44) angegossen ist.

11. Gasfeder nach Anspruch 10,
dadurch gekennzeichnet, daß der Abdichtring (46) und die Dichtlippe (48) integral durch eine oder mehrere Öffnungen (50, 52, 54) des Verstärkungsrings (44) integral miteinander verbunden sind.

12. Gasfeder nach Anspruch 11,
dadurch gekennzeichnet, daß die eine oder mehrere Öffnungen (50, 52, 54) mindestens einen Abschnitt aufweist, der sich nicht axial erstreckt, um der Extrusion des Elastomermaterials durch die Öffnung zu widerstehen, wenn sich der Kolben (34) in der Kammer (14) axial bewegt.

13. Gasfeder nach Anspruch 12,
dadurch gekennzeichnet, daß die Öffnung eine sich generell radial nach innen öffnende Aussparung (50) im Verstärkungsring (44), mindestens eine sich axial erstreckende Blindbohrung (52) benachbart der Aussparung (50), die sich nur durch eine Seite des Verstärkungsrings (44) erstreckt, und eine von der Bohrung (52) ausgehende Pforte (54) aufweist, die in einen radial äußeren Teil der Aussparung (50) mündet.

14. Gasfeder nach Anspruch 13,
dadurch gekennzeichnet, daß die Aussparung (50) eine ringförmige Nut darstellt.

15. Gasfeder nach einem der Ansprüche 9 bis 14,
dadurch gekennzeichnet, daß die ringförmige Wand des Gehäuses (16) in Druckkontakt mit dem Verstärkungsring (44) gestaucht ist.

16. Gasfeder nach Anspruch 15,
dadurch gekennzeichnet, daß die Ringwand ein Endteil (24) aufweist, das sich axial nach außen und jenseits der Druckkontaktstelle des Verstärkungsrings (44) erstreckt, und daß das Endteil (24) radial nach innen gewalzt ist, um die Stellung des Verstärkungsrings (44) zu beschränken und diesen rückzuhalten.

17. Gasfeder nach Anspruch 16,
dadurch gekennzeichnet, daß die Dichtlippe (48) durch Kontakt mit dem Endteil (24) der ringförmigen Wandung hat.

18. Gasfeder nach Anspruch 16 oder 17,
dadurch gekennzeichnet, daß das Endteil (24) den Umfang der Dichtlippe (48) überlappt.

19. Gasfeder nach einem der Ansprüche 1 bis 18,
dadurch gekennzeichnet, daß die Ringwand des Gehäuses (16) eine zweite Öffnung bestimmt, daß eine Endkappe (22) in die ringförmige Wand eingepaßt ist sowie entlang einer in Umfangsrichtung kontinuierlichen Kontaktlinie anliegt, um die zweite Öffnung zu schließen, und daß ein Dichtungsring (82) in der Kammer (14) vorgesehen ist, in Umfangsrichtung im kontinuierlichen Abdichtkontakt mit der Ringwandung und mit der Endkappe (22) steht, und daß die Ringwandung in Druckkontakt mit der Endkappe (22) entlang einer Kontaktlinie gestaucht ist, um den Dichtungsring (82) davor zu bewahren, zwischen der Ringwandung und der Endkappe herausgedrückt zu werden.

20. Gasfeder nach Anspruch 19,
dadurch gekennzeichnet, daß die Ringwandung ein Endteil (26) aufweist, das sich axial bis jenseits der Kontaktlinie und generell radial nach innen erstreckt, um die Endkappe (22) festzulegen und dort zu halten.

21. Gasfeder nach Anspruch 19 oder 20,
dadurch gekennzeichnet, daß der Dichtungsring (82) einen viereckigen Querschnitt aufweist.

22. Gasfeder nach einem der Ansprüche 19 bis 21,
dadurch gekennzeichnet, daß die Endkappe einen Füllkanal (90) aufweist, um die Kammer (14) mit Gas zu laden,
daß die Endkappe (22) ein rohrförmiges Ventilgehäuse (86, 88) umfaßt, das in die Kammer (14) axial vorsteht und an einem offenen inneren Ende endigt,
daß das Ventilgehäuse (86, 88) einen Teil (85) des Füllkanals bestimmt, daß ein Ventil (96) mit einem Kopf (98) lose in das Ventilgehäuse (86, 88) eingefügt ist
und daß eine Dichtung (102) im Kanal benachbart dem Ventil vorgesehen ist, wobei das Ventil (96) dem Gasdruck in der Kammer (14) unterliegt, um an der Dichtung (102) anzuliegen und den Füllkanal zu schließen, während bei dem Einströmen von Ladegas das Ventil den Füllkanal öffnet, wobei ferner das Ventilgehäuse (86, 88) nach innen gewendete Lappen (106) über dem offenen Ende aufweist, um den Ventilkopf (98) zu halten.

23. Gasfeder nach Anspruch 22,
dadurch gekennzeichnet, daß die Lappen (106) integral am inneren Ende des Ventilgehäuses (86, 88) gebildet sind.

24. Gasfeder nach einem der Ansprüche 19 bis 21,
dadurch gekennzeichnet, daß die Endkappe (22) einen Füllkanal (90') aufweist, um die Kammer (14) mit Gas zu füllen, daß ein Kopf (114) axial von der Endkappe (22a, 22b) in die Kammer (14) vorsteht, daß eine generell V-förmige Nut (120) mit verringertem Querschnitt relativ zum Kopf (114) zwischen dem freien Ende des Kopfes (114) und der Endkappe (122) vorgesehen und angeordnet ist, daß der Füllkanal (90') in die Kammer (14) über einen Durchlaß (122) in die Nut (120) einmündet und daß ein O-Ring (124) die Nut (120) umgibt und in diese aufgenommen wird, wobei der O-Ring (124) dem Gasdruck in der Kammer (14) unterliegt, um am Durchlaß (122) anzuliegen und diesen zu schließen, und auch dem Einlaßstrom des Ladegases unterliegt, um den Durchlaß (122) zu öffnen.

## Revendications

1. Ressort à gaz comprenant :
un boîtier tubulaire allongé (16) enfermant une chambre (14) pour renfermer du gaz sous pression et comprenant une paroi annulaire qui définit une ouverture (24a) à une extrémité (24) de ladite chambre (14),
un palier (36) dans ladite chambre adjacent à une extrémité dudit boîtier et comportant un alésage traversant (36b),
un piston (34) dans ladite chambre situé en amont dudit palier (36) et comportant un alésage traversant central (142),
une tige (20) reçue dans ledit alésage traversant (36b) dudit palier (36) pour un va-et-vient généralement axial en son sein et se projetant depuis ladite chambre (14) via ladite ouverture (24a),
un joint (18) d'un matériau flexible et compressible adjacent à ladite extrémité (24) dudit boîtier (16) et étanchant l'espace entre ledit boîtier (16) et ladite tige (20) pour retenir le gaz comprimé dans ladite chambre (14), et un agrandissement (32, 126) relié à la tige (20) recouvrant ledit alésage traversant (142) dudit piston (34), et reliant ladite tige (20) avec ledit piston (34) pour un va-et-vient à l'unisson,
caractérisé en ce que ledit agrandissement (32, 126) a un diamètre extérieur supérieur au diamètre dudit alésage traversant (36b) dudit palier (36) et est construit et agencé de manière que, si ledit piston se sépare de ladite tige à l'utilisation du ressort à gaz, ledit agrandissement (32, 126) traverse ledit piston (34) et se loge dans ledit palier (36) pour retenir ladite tige (20).

2. Ressort à gaz selon la revendication 1, dans lequel le diamètre extérieur dudit agrandissement (32, 126) est au moins supérieur de 0,25 mm (0,010 pouce) au diamètre intérieur dudit palier (36).

3. Ressort à gaz selon la revendication 1 ou 2, dans lequel ledit agrandissement (32, 126) est une portion évasée de ladite tige (20) et est d'un seul tenant avec ladite tige de manière homogène.

4. Ressort à gaz selon l'une quelconque des revendications 1 à 3, dans lequel un bord postérieur dudit alésage traversant (142) dudit piston (34) comporte un chanfrein (128) sur lui et ledit agrandissement (32, 126) porte normalement sur ledit chanfrein (128) dudit piston.

5. Ressort à gaz selon la revendication 4, dans lequel ledit piston (34) est relativement mince et ledit chanfrein (128) et ledit agrandissement (32, 126) sont construits et agencés de manière que, si ledit piston se sépare de ladite tige (20), ledit piston (34) soit déformé pour augmenter le diamètre de son alésage traversant (142), tandis que ledit alésage traversant (142) le traverse.

6. Ressort à gaz selon la revendication 5, dans lequel ledit piston (34) est une rondelle.

7. Ressort à gaz selon l'une quelconque des revendications 1 à 6, qui comprend également un arrêt (42, 138, 140) au sein dudit boîtier et supporté par ledit boîtier (16) sur lequel ledit piston (34) porte lorsque ladite tige (20) est dans sa position complètement déployée normale.

8. Ressort à gaz selon l'une quelconque des revendications 1 à 7, qui comprend une lumière de sortie (130) dans ladite tige (20) et est en communication continue avec ladite chambre (14) dans ledit boîtier (16), ladite lumière (130) étant espacée axialement de l'extrémité du piston de ladite tige (20) de manière que lorsque ladite tige (20) est dans sa position complètement déployée normale avec ledit piston reçu sur elle, ladite lumière (130) se trouve en amont du point de contact d'étanchéité (64) dudit joint (18) avec ladite tige (20) et si ledit piston (24) se sépare de ladite tige (20) tandis que ledit agrandissement (32, 126) se loge dans ledit palier (36), ladite lumière (130) soit disposée axialement en aval dudit point de contact (64) dudit joint (18) avec ladite tige (20) afin d'évacuer le gaz comprimé dans l'atmosphère.

9. Ressort à gaz selon l'une quelconque des revendications 1 à 8, dans lequel ledit joint (18) est un ensemble d'étanchéité comprenant un anneau de renfort (44) entourant ladite tige (20) en relation de support avec ladite paroi annulaire (24), un anneau d'étanchéité (46) de matériau flexible, compressible fixé à une face dudit anneau de renfort (44) et étant en contact d'étanchéité avec ladite paroi annulaire (24) et avec ladite tige (20), et
une came (48) de matériau flexible, compressible fixée à l'autre face dudit anneau de renfort (44), entourant ladite tige (20) et étant en contact frottant avec ladite tige.

10. Ressort à gaz selon la revendication 9, dans lequel ledit anneau d'étanchéité (46) et ladite came (48) sont des portions d'un seul corps de matériau élastomère moulé sur ledit anneau de renfort (44).

11. Ressort à gaz selon la revendication 10, dans lequel ledit anneau d'étanchéité (46) et ladite came (48) sont reliés d'un seul tenant via une ou plusieurs ouvertures (50, 52, 54) dans ledit anneau de renfort (44).

12. Ressort à gaz selon la revendication 11, dans lequel lesdites une ou plusieurs ouvertures (50, 52, 54) comportent au moins un segment s'étendant non axialement pour résister à l'extrusion de matériau élastomère via ladite ouverture tandis que ledit piston (34) se déplace axialement dans ladite chambre (14).

13. Ressort à gaz selon la revendication 12, dans lequel ladite ouverture comprend un évidement s'ouvrant généralement radialement vers l'intérieur (50) dans ledit anneau de renfort (44), au moins un trou borgne s'étendant axialement (52) adjacent audit évidement (50) s'ouvrant sur une face seulement dudit anneau de renfort (44), et une lumière (54) depuis ledit trou (52) s'ouvrant dans une portion externe radialement dudit évidement (50).

14. Ressort à gaz selon la revendication 13, dans lequel ledit évidement (50) est une gorge annulaire.

15. Ressort à gaz selon l'une quelconque des revendications 9 à 14, dans lequel ladite paroi annulaire dudit boîtier (16) est refoulée en contact de pression avec ledit anneau de renfort (44).

16. Ressort à gaz selon la revendication 15, dans lequel ladite paroi annulaire comprend une portion terminale (24) s'étendant axialement vers l'extérieur au-delà du point de contact de pression avec ledit anneau de renfort (44), ladite portion terminale (24) étant roulée radialement vers l'intérieur pour confiner et retenir ledit anneau de renfort (44).

17. Ressort à gaz selon la revendication 16, dans lequel ladite came (48) est en contact d'étanchéité avec ladite portion terminale (24) de ladite paroi annulaire.

18. Ressort à gaz selon la revendication 16 ou 17, dans lequel ladite portion terminale (24) recouvre la périphérie de ladite came (48).

19. Ressort à gaz selon l'une quelconque des revendications 1 à 18, dans lequel ladite paroi annulaire dudit boîtier (16) définit une seconde ouverture, un bouchon d'extrémité (22) est emboîté dans ladite paroi annulaire et engage celle-ci le long d'une ligne continue circonférentielle de contact afin de fermer ladite seconde ouverture, et un anneau d'étanchéité (82) est situé dans ladite chambre (14) en contact d'étanchéité continu circonférentiel avec ladite paroi annulaire et avec ledit bouchon d'extrémité (22), ladite paroi annulaire étant refoulée en contact de pression avec ledit bouchon d'extrémité (22) le long d'une ligne de contact afin d'empêcher ledit anneau d'étanchéité (82) d'être extrudé entre ladite paroi annulaire et ledit bouchon d'extrémité.

20. Ressort à gaz selon la revendication 19, dans lequel ladite paroi annulaire comporte une portion terminale (26) s'étendant axialement au-delà de ladite ligne de contact et généralement radialement vers l'intérieur pour confiner et retenir ledit bouchon d'extrémité (22).

21. Ressort à gaz selon la revendication 19 ou 20, dans lequel ledit anneau d'étanchéité (82) est un quadrilatère.

22. Ressort à gaz selon l'une quelconque des revendications 19 à 21, dans lequel ledit bouchon d'extrémité comporte un passage de remplissage (90) en son sein pour charger ladite chambre (14) de gaz, ledit bouchon d'extrémité (22) comprend une chambre de soupape tubulaire (86, 88) se projetant axialement dans ladite chambre (14) et se terminant dans une extrémité interne ouverte, ladite chambre de soupape (86, 88) définit une portion (92) dudit passage de remplissage, une soupape (96) comportant une tête (98) est ajustée avec jeu dans ladite chambre de soupape (86, 88) et un joint (102) est disposé dans ledit passage adjacent à ladite soupape, ladite soupape (96) est soumise à la pression du gaz dans ladite chambre (14) pour engager ledit joint (102) et fermer ledit passage de remplissage, et soumise à l'entrée de gaz chargé pour ouvrir ledit passage de remplissage, ladite chambre de soupape (86, 88) comporte des pattes tournées vers l'intérieur (106) en travers de ladite extrémité ouverte pour retenir ladite tête (98) en son sein.

23. Ressort à gaz selon la revendication 22, dans lequel lesdites pattes (106) sont formées d'un seul tenant sur ladite extrémité interne de ladite chambre de soupape (86, 88).

24. Ressort à gaz selon l'une quelconque des revendications 19 à 21, dans lequel ledit bouchon d'extrémité (22) comporte un passage de remplissage (90') en son sein pour charger ladite chambre (14) de gaz, une tête (114) se projette axialement depuis ledit bouchon d'extrémité (22a, 22b) dans ladite chambre (14), une gorge généralement en forme de V (120) de section transversale réduite relativement à ladite tête (114) est prévue et disposée entre l'extrémité libre de ladite tête (114) et ledit bouchon d'extrémité (22), ledit passage de remplissage (90') s'ouvre sur ladite chambre (14) via une lumière (122) dans ladite gorge (120), et un joint torique (124) entoure ladite gorge (120) et est reçu dans celle-ci, ledit joint torique (124) est soumise à la pression du gaz dans ladite chambre (14) pour engager et fermer ladite lumière (122) et est soumis à l'entrée de gaz chargé pour ouvrir ladite lumière (122).
